# EUROPÄISCHE PATENTANMELDUNG

(11) **EP 1 422 507 A2**
(43) Veröffentlichungstag der Anmeldung: **26.05.2004**
(21) Anmeldenummer: 03026327.1
(22) Anmeldetag: 17.11.2003
(51) Int. Cl.: G01M 17/007

(54) **Kammer sowie Verfahren zur Messung von Verdunstungs- bzw. Verdampfungsemission**

(30) Priorität: 20.11.2002 DE 10254240
(71) Anmelder: WEISS UMWELTTECHNIK GmbH, D-35447 Reiskirchen (DE)
(72) Erfinder: Hehl, Karl-Heinz, 35394 Giessen (DE)
(74) Vertreter: Stoffregen, Hans-Herbert, Dr. Dipl.-Phys.

(57) **Zusammenfassung**

Die Erfindung bezieht sich auf eine Kammer (10) mit Volumenausgleich zur Messung von Verdunstungsemission eines in der Kammer angeordneten Kraftfahrzeugs (24), umfassend die Kammer begrenzende Seiten-, Boden- und Deckenwandungen (12, 14, 16, 18) sowie eine Temperiereinrichtung zum Einstellen eines gewünschten Temperaturgangs in der Kammer. Um eine Verfälschung der Emissionswerte durch die Kammer oder Einrichtungen dieser zu minimieren, wird vorgeschlagen, dass die Temperiereinrichtung zumindest eine der temperierbar ausgebildeten Wandungen (12, 14, 16, 18) oder eines Abschnitts dieser ist.

## Beschreibung

Die Erfindung bezieht sich auf eine Kammer mit Volumenausgleich insbesondere zur Messung von Verdunstungs- bzw. Verdampfungsemission eines in der Kammer angeordneten Objekts wie Kraftfahrzeuges oder eines Teils eines solchen, umfassend die Kammer begrenzende Seiten-, Boden- und Deckenwandungen sowie eine Temperiereinrichtung zum Einstellen eines gewünschten Temperaturgangs in der Kammer. Ferner bezieht sich die Erfindung auf ein Verfahren zum Messen von Verdunstungs- bzw. Verdampfungsemission eines in einer Seiten-, Boden- und Deckenwandungen umfassenden Kammer angeordneten Objekts, wobei Kammerinnenraum während der Messung auf einen gewünschten Temperaturgang, insbesondere sinusförmigen Temperaturverlauf zwischen vorzugsweise in etwa 18 °C und vorzugsweise in etwa 42 °C eingestellt wird.

Um Verdunstungs- bzw. Verdampfungsemissionen in Form von vorzugsweise Kohlenwasserstoffen, die von Fahrzeugen an die Umgebungsluft abgegeben werden, zu messen, gelangen Kammern in Form von sogenannten SHEDs (SHED = Sealed Housing for Evaporative Determination) zum Einsatz. Während der Messung wird der Kammerinnenraum und somit die Verdunstungs- bzw. Verdampfungsemission des in der Kammer angeordneten Objekts einem Temperaturgang vorzugsweise sinusförmigen Verlaufs ausgesetzt, wobei Temperaturzyklen zwischen in etwa 18,3 °C und 40,6 °C durchfahren werden. Aufgrund der sich ändernden Temperaturverhältnisse und gegebenenfalls von über den Messzeitraum erfolgenden Druckänderungen ist es erforderlich, dass entsprechende SHED-Einrichtungen über einen Volumenausgleich verfügen, um auf diese Weise die im ppm-Bereich liegenden Kohlenwasserstoffkonzentrationen hinreichend genau bestimmen zu können.

Um einen hinreichend genauen Druckausgleich vorzunehmen, wobei gleichzeitig sichergestellt ist, dass das Ausgleichsvolumen gut temperiert und einwandfrei durchspült ist, wird nach der EP 0 528 339 B1 vorgeschlagen, dass die Deckenwandung der Kammer oder zumindest ein Abschnitt druckabhängig selbständig verstellbar ist, wobei die Deckenwandung bzw. deren Abschnitt gegenüber der Kammer über eine Flüssigkeitsdichtung oder eine flexible Dichtung abgedichtet ist. Gleichzeitig erfolgt die Vorgabe, dass bei Verwendung einer Dichtung in Form einer Flüssigkeit diese schwer verdampfbar ist und keine Kohlenwasserstoffe aufnimmt oder abgibt. Die verwendeten Materialien für die Innenflächen der Kammer sind des Weiteren so gewählt, dass Kohlenwasserstoff und Methanol weder adsorbiert noch desorbiert werden können.

Nach den zur Zeit geltenden Bestimmungen darf die Emissionsrate der zu messenden Objekte, insbesondere Kraftfahrzeuge 2000 mg/Test an VOCs (Volatile Organic Components) wie Kohlenwasserstoffen (HC) nicht überschreiten. In Zukunft soll die Emissionsrate kleiner ca. 400 mg/Test reduziert werden. Mit den bekannten Kammern bzw. SHEDs lassen sich jedoch diese in Zukunft einzuhaltenden Grenzwerte nicht nachweisen, da durch die Konstruktion der Kammern und deren Einbauten bedingte Adsorptions- und Desorptionsvorgänge zu einer Eigenemission führen, die die Verdunstungs- bzw. Verdampfungsemission des zu messenden Objekts überlagern bzw. in einem Umfang abdecken, dass reproduzierbare Messergebnisse nicht erzielbar sind.

Für Kühlräume ist es bekannt, von einer Raumdecke eine Zwischendecke abzuhängen, die raumdeckenseitig Kühlrohrleitungen aufweist (DE 296 07 324 U1).

In der CH 254 181 bzw. der DE 197 12 744 C1 werden Raumtemperatursysteme beschrieben, die als Vorsatzschale einer Bauwerkswand bzw. in einer Nische dieser anordbar sind. Mit dem entsprechenden Heizsystem soll ein Raum im gewünschten Umfang temperiert bzw. gekühlt werden, ohne dass ein zeitabhängiger Temperaturgang über einen Temperaturbereich von z.B. 18 - 42 °C gewünscht wird.

Der vorliegenden Erfindung liegt daher das Problem zugrunde, eine Kammer sowie ein Verfahren zur Messung von Verdunstungs- bzw. Verdampfungsemission der eingangs genannten Art so weiterzubilden, dass Fremdemissionen in der Kammer reduziert werden, so dass die von dem zu messenden Objekt ermittelte Verdunstungs- bzw. Verdampfungsemission reproduzierbar nachweisbar ist.

Erfindungsgemäß wird das Problem durch eine Kammer zuvor beschriebener Art im Wesentlichen dadurch gelöst, dass die Temperiereinrichtung zumindest eine der temperierbar ausgebildeten Wandungen oder eines Abschnitts dieser ist. Dabei bilden zumindest zwei, vorzugsweise sämtliche Wandungen bzw. Abschnitte der Kammer die Temperiereinrichtung. Zusätzliche Temperiereinrichtungen wie die nach dem Stand der Technik erforderlichen und im Innenraum der Kammer angeordneten Wärmetauscher oder gleichwirkende Einrichtungen sind nicht mehr erforderlich.

Erfindungsgemäß wird eine manteltemperierbare Kammer vorgeschlagen, d.h. die die Kammer umschließenden Wandungen werden temperierbar ausgebildet, so dass sich ein Einbau eines Wärmetauschers in der Kammer erübrigt. Hierdurch erfolgt eine Reduzierung der in der Kammer vorhandenen Flächen, die die zu messenden Elemente wie Kohlenwasserstoffe adsorbieren bzw. desorbieren könnten. Somit ist eine Verringerung von Fremdemissionen sichergestellt mit der Folge, dass die Verdunstungs- bzw. Verdampfungsemission des zu messenden Objektes wie Kraftfahrzeuges oder Teils dieses mit einer Genauigkeit messbar ist, die reproduzierbare Aussagen über die tatsächliche Emission ermöglichen, insbesondere einen Nachweis in der Größenordnung von kleiner gleich 400 mg/Test gestatten.

Zum Temperieren der Wandung bzw. Wandungen bzw. deren Abschnitte können diese doppelwandig ausgebildet sein, um durch so gebildeten Zwischenraum ein temperierbares Fluid wie Gas, insbesondere Luft oder eine Flüssigkeit zu führen.

Nach einem weiteren Vorschlag der Erfindung kann auf der Wandung, d.h. dessen Außenfläche eine Flächenheizung aufgebracht sein, über die eine Temperierung erfolgt. Zur Kühlung können Peltierelemente verwendet werden.

Die Wandung selbst kann aus einer ebenen Innenwandung und einen wellenförmigen Außenwandung bestehen, wobei Innen- und Außenwandung im Scheitellinienbereich der Auβenwandungen miteinander verbunden wie veschweißt, insbesondere ultraschallverschweißt sind. Die entsprechenden zwischen Innen- und Außenwandung verlaufenden ausgebildeten Zwischenräume können sodann mit dem Fluid wie der Luft oder der Flüssigkeit beaufschlagt werden.

Auch besteht die Möglichkeit, Innen- und Außenwandung parallel zueinander verlaufen zu lassen, so dass sich im Wesentlichen ein durchgehender Zwischenraum mit konstantem Querschnitt ergibt, der von dem gewünschten Fluid durchströmbar ist.

Um eine ordnungsgemäße Durchmischung der in der Kammer vorhandenen Atmosphäre sicherzustellen, ist in dieser ein Lüfter angeordnet, dessen Antrieb kammeraußenseitig verläuft. Insbesondere ist vorgesehen, dass ein Lüfterrad des Lüfters über eine Magnetkupplung antreibbar ist. Dabei kann das Lüfterrad aus einem Material bestehen oder eine Beschichtung aufweisen, die eine Adsorption bzw. Desorption der zu messenden Elemente wie Kohlenwasserstoffe ausschließt bzw. minimiert.

Des Weiteren sind in der Kammer ein oder mehrere Sensoren angeordnet, die entweder kabellos mit außerhalb der Kammer angeordnete Auswerteeinrichtungen verbunden sind oder über Kabel, die eine Adsorption von den zu messenden Elementen wie den Kohlenwasserstoffen weitgehend ausschließen. Hierzu sind die entsprechenden Kabel mit einer entsprechenden Ummantelung insbesondere aus Teflon versehen.

Sofern der bzw. die Sensoren mit einem zu einer außerhalb der Kammer angeordneten Messeinrichtung führenden Kabel verbunden sind, sollten dieses bevorzugterweise entlang Normalen oder in etwa Normalen nächstliegender Wandung verlaufen. Hierdurch ist sichergestellt, dass die entsprechenden Kabel eine minimale Längenerstreckungen in der Kammer aufweisen.

Zur weiteren Reduzierung einer Störemission, die von der Kammer bzw. Einrichtungen dieser hervorgerufen wird, ist vorgesehen, dass kammerseitige Innenfläche der Wandungen geglättet ist. Dies kann chemisch bzw. elektrochemisch erfolgen. Auch besteht die Möglichkeit, dass die Innenflächen der Wandungen mit einer eine Adsorption von den zu messenden Elementen ausschließenden oder weitgehend ausschließenden Beschichtung versehen sind. Hierbei kann es sich um eine Kunststoffbeschichtung zum Beispiel aus Teflon bzw. Polyvinylfluorid handeln. Andere geeignete Materialien sind gleichfalls denkbar.

Um den gewünschten Volumenausgleich während der Messungen aufgrund erfolgender Temperatur- bzw. Druckänderung sicherzustellen, sieht die Erfindung vor, dass die Deckenwandung oder ein Abschnitt dieser gegenüber dem Kammerinneren kammerdruckabhängig verstellbar und gegenüber dem Kammerinneren über eine Flüssigkeitsdichtung und/oder eine flexible Dichtung abgedichtet ist. Bei der Verwendung einer Flüssigkeitsdichtung wird dabei eine Flüssigkeit gewählt, die schwer verdampfbar ist und die zu messenden Elemente wie Kohlenwasserstoff weder aufnimmt noch abgibt. Ferner ist die Flüssigkeit derart temperierbar, dass deren Temperatur der des Kammerinneren entspricht.

Die Kammer selbst wird über eine verschließbare Öffnung beschickt. Hierzu ist vorgesehen, dass in einer Seitenwandung eine von einem Verschlusselement wie Tür angeordnete Öffnung verläuft, das gegenüber der Öffnung über eine umlaufende oder im Wesentlichen umlaufende druckluftbeaufschlagbare Dichtung abdichtbar ist. Somit ist mit konstruktiv einfachen Maßnahmen ein sicheres Abdichten des Kammerinneren gegenüber der Außenatmosphäre sichergestellt. Die druckbeaufschlagbare Dichtung besteht dabei aus einem Material, das eine minimale Neigung zur Ad- bzw. Desorption der zu messenden Elemente wie Kohlenwasserstoffe aufweist.

Ein Verfahren zum Messen von Verdunstungs- bzw. Verdampfungsemission eines in einer Seiten-, Boden- und Deckenwandungen aufweisenden Kammer angeordneten angeordneten Objekts, wobei Kammerinnenraum während der Messung auf einen gewünschten Temperaturgang, insbesondere sinusförmigen Temperaturverlauf zwischen vorzugsweise in etwa 18 °C und vorzugsweise in etwa 42 °C eingestellt wird, zeichnet sich dadurch aus, dass als Wandungen der Kammer solche verwendet werden, deren Adsorption und/oder Desorption von zu messenden Elementen minimiert ist, dass die Wandungen oder zumindest einige und/oder Abschnitte dieser vor Anordnen des Objekts in der Kammer bis zu einer Temperatur T ausgeheizt werden und dass der gewünschte Temperaturgang in der Kammer bei in dieser angeordnetem Objekt durch Beheizung und Kühlung der Wandungen oder zumindest einiger dieser und/oder Abschnitte dieser erfolgt. Dabei kann die Wandung bzw. die Wandungen bzw. deren Abschnitte durch Fluidbeaufschlagung und/oder elektrisch temperiert werden.

Insbesondere ist vorgesehen, dass die Wandung bzw. Wandungen bzw. deren Abschnitte vor Anordnen des Objekts in der Kammer bis zu einer materialbedingten Grenztemperatur ausgeheizt werden, so dass etwaige in den Wandungen eingelagerte zu Messverfälschungen führende Elemente wie Kohlenwasserstoff desorbiert und durch Durchspülen der Kammer entfernt werden können.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung eines SHEDs,
- Fig. 2: eine erste Ausführungsform einer Kammerwandung im Ausschnitt,
- Fig. 3: eine zweite Ausführungsform einer Kammerwandung im Ausschnitt,
- Fig. 4: eine dritte Ausführungsform einer Kammerwandung im Ausschnitt,
- Fig. 5: im Ausschnitt ein SHED im Deckenwandbereich,
- Fig. 6: einen Ausschnitt einer Dichtung im Öffnungsbereich der Kammer und
- Fig. 7: eine Schnittdarstellung der Kammer im Öffnungsbereich.

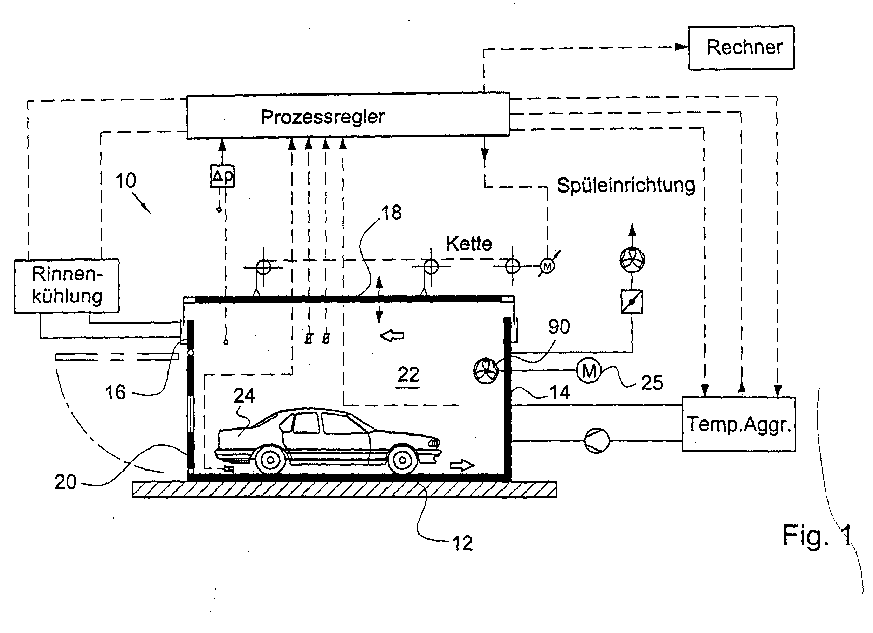

Um Verdampfungs- bzw. Verdunstungsemissionen eines Objektes wie eines Kraftfahrzeuges über einen Zeitraum von zum Beispiel 72 Stunden zu messen, wobei das Objekt einem vorzugsweise sinusförmigen Temperaturzyklus zwischen in etwa 18,3 °C und in etwa 40,6 °C ausgesetzt wird, wird eine Kammer 10 oder SHED (Sealed Housing for Evaporative Determination) benutzt, die rein prinzipiell der Fig. 1 zu entnehmen ist.

Die Kammer 10 weist eine Boderiwandung 12, Seitenwandungen 14, 16 sowie eine Deckenwandung 18 auf. Im Ausführungsbeispiel ist in der Seitenwandung 16 ein aufklappbares Verschlusselement 20 vorgesehen, um in die Kammer, d.h. deren Innenraum 22 ein zu messendes Objekt, insbesondere ein Kraftfahrzeug 24 einzubringen.

Um den gewünschten Temperaturgang zu erzielen, wird abweichend von vorbekannten SHEDs kein Wärmetauscher in dem Innenraum 22 angeordnet, sondern zumindest die Seitenwandungen 14, 16 werden temperiert. Dies ist auch in Bezug auf das Verschlusselement 20 möglich. Insbesondere werden jedoch nur die Seitenwandungen temperiert, die keine Öffnung aufweisen. Selbstverständlich besteht auch die Möglichkeit, dass die Bodenwandung 12 und/oder die Deckenwandung 18 temperiert werden.

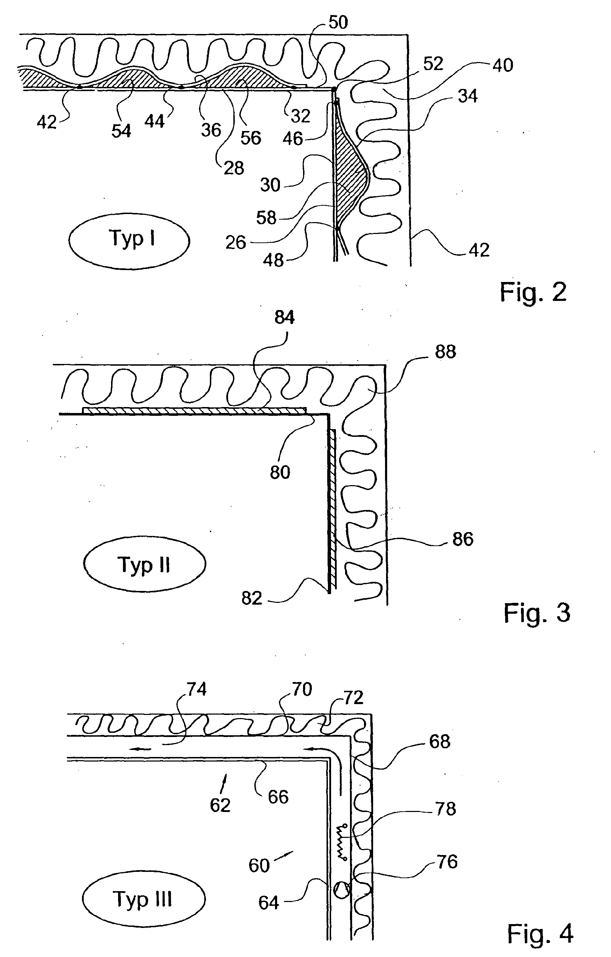

Um die Seitenwandungen 14, 16 zu temperieren, sind entsprechend den Fig. 2 und 4 beispielhaft folgende Möglichkeiten vorgesehen. So sind im Ausführungsbeispiel der Fig. 2 Seitenwandungen 26, 28 doppelwandig ausgebildet und weisen eine Innenwandung 30, 32 und eine Außenwandung 34, 36 auf, die ihrerseits außenseitig von einem Isolationsmaterial wie Dämmstoff 40 abgedeckt ist. Das Isolationsmaterial 40 kann seinerseits außenseitig von einer Wandung 42 begrenzt sein.

Wie die Darstellung der Fig. 2 verdeutlicht, ist die Innenwandung 30, 32 eben ausgebildet, wohingegen die Außenwandung 34, 36 eine Wellengeometrie aufweist und in ihren Scheitelbereichen, also entlang der Linien 42, 44, 46, 48 mit der Innenwandung 30, 32, d.h. deren Außenflächen 50, 52 insbesondere durch Schweißen verbunden ist. Dabei gelangt vorzugsweise das sogenannte Ultraschall-Rollnahtschweißen zur Anwendung. Hierdurch werden zwischen den Innenwandungen 30, 32 und den Außenwandungen 34, 36 Zwischenräume 54, 56, 58 gebildet, die mit einem temperierbaren Fluid wie Luft oder Wasser durchströmbar sind. Somit können die Innenwandungen 30, 32 auf gewünschte Temperaturen eingestellt werden, um den Innenraum 22 der Kammer 10 zu temperieren und den gewünschten Temperaturgang einzustellen.

Nach dem Ausführungsbeispiel der Fig. 4 bestehen Wandungen 60, 62 eines entsprechenden SHEDs aus parallel zueinander verlaufenden Innenwandungen 64, 66 und Außenwandungen 68, 70, die entsprechend der Fig. 2 außenseitig mit einem Isolationsmaterial 72 abgedeckt sind. Zwischen den Innen- und Außenwandungen 64, 66 bzw. 68, 70 wird somit ein durchgehender Zwischenraum 74 gebildet, durch den insbesondere Luft strömen kann. Zur erforderlichen Zirkulation kann in dem Zwischenraum 74 eine Umlufteinrichtung 76 in Form eines Ventilators sowie eine Temperiereinrichtung in Form einer Heizung 78 bzw. eines Kühlaggregats angeordnet sein. Selbstverständlich können die entsprechenden Elemente auch außerhalb des Zwischenraums 74 vorgesehen sein und über ein Verbindungskanal mit dem Zwischenraum 74 verbunden sein.

Bei dem Ausführungsbeispiel der Fig. 3 weisen Wandungen 80, 82, die einen Innenraum eines SHEDs begrenzen, außenseitig flächige Heizelemente 84, 86 auf, um im gewünschten Umfang den von den Wandungen 80, 82 begrenzten Innenraum zu temperieren. Zur Kühlung können Peltierelemente oder andere geeignete Einrichtungen verwendet werden. Auch sind die Wandungen 80, 82 außenseitig von einem Isolationsmaterial 88 entsprechend den Erläuterungen nach den Fig. 2 und 4 abgedeckt.

Durch diese Maßnahmen ist die Erstreckung von Flächen, die den Innenraum 22 begrenzen bzw. innerhalb von diesem verlaufen, im Vergleich zu bekannten SHEDs erheblich reduziert, da insbesondere die ansonsten benötigten Wärmetauscher entfallen. Ferner können die Innenflächen der Wandungen 12, 14, 16, 18 zum Beispiel chemisch bzw. elektrochemisch geglättet sein, um gegebenenfalls vorhandene Rauigkeiten zu beseitigen. Hierdurch wird zusätzlich sichergestellt, dass eine Adsorption bzw. Desorption von Elementen wie Kohlenwasserstoffen reduziert wird. Zusätzlich oder alternativ können die Innenflächen mit einem Material beschichtet sein, das ebenfalls zu keiner die Messverfälschungen wesentlich verfälschenden Adsorption bzw. Desorption von VOCs (Volatile Organic Components) führt. Als geeignete Beschichtungen können solche aus Kunststoff wie Teflon oder Polyvinylfluorid gewählt werden. Andere Materialien sind gleichfalls denkbar.

Unabhängig hiervon sollten die Wandungen aus Edelstahl wie V2A-Stahl bestehen, der kammerinnenraumseitig geglättet ist. Dies gilt auch für die Bodenwandung 12, die nicht - wie sonst üblich - eine Drainblechstruktur aufweist.

Um die in dem Innenraum 22 vorhandene Luft zu durchmischen bzw. umzuwälzen, ist ein Umlüfter mit Lüfterrad 90 vorgesehen, der über einen außerhalb der Kammer 10 vorhandenen Antrieb 25 betätigbar ist. Hierzu kann eine Magnetkupplung vorgesehen sein. Ferner sollte das Lüfterrad aus einem Material bestehen bzw. eine Beschichtung aufweisen, das bzw. die zu einer Minimierung von Adsorption bzw. Desorption von VOCs führt.

Für die Messung erforderliche Sensoren können kabellos mit außerhalb der Kammer 10 vorhandenen Auswerteeinrichtungen verbunden sein. Sofern eine Verbindung über Kabel erfolgt, sollten diese eine minimale Erstreckung innerhalb der Kammer 10 bzw. dem Innenraum 22 aufweisen. Insbesondere sollten die von den Sensoren ausgehenden Kabel entlang oder in etwa entlang der Normalen der nächstliegenden Wandung 12, 14, 16, 18 verlaufen. Bei der Verwendung von Kabeln weisen diese des Weiteren eine Ummantelung zum Beispiel aus Teflon auf, die emissionsarm ist. Etwaige notwendige Steckverbindungen für zum Beispiel Fühlerkabel werden aus dem Kammerinneren nach außen verlegt. Das Vorhandensein von zusätzlichen Öffnungen neben derjenigen, die durch das Verschlusselement 20 verschließbar ist, wird vermieden.

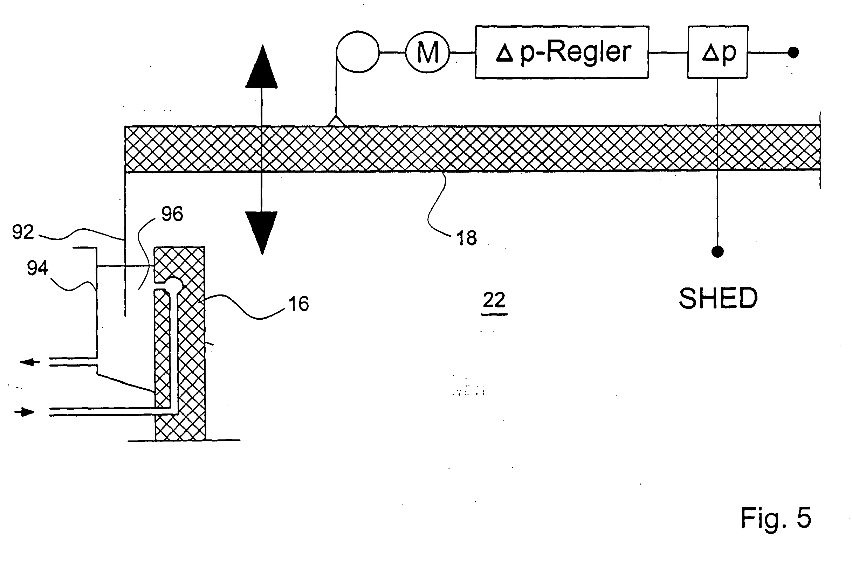

Um im erforderlichen Umfang einen Volumenausgleich bei erfolgender Druckänderung sicherzustellen, ist entsprechend der erfindungsgemäßen Lehre bevorzugterweise vorgesehen, dass in dem Kammerinneren 22 kein ansonsten zum Einsatz gelangender Tedlarbeutel eingesetzt wird, sondern dass die Deckenwandung 18, als das Dach der Kammer 10 entsprechend der Lehre der EP 0 528 339 B1 kammerdruckabhängig selbsttätig verstellbar ist, wobei das Gewicht der Deckenwandung 18 über ein Gegengewicht ausgleichbar ist. Die Abdichtung des Deckenelementes 18 erfolgt entsprechend der Darstellung gemäß Fig. 5 gegenüber den Seitenwandungen 14, 16 über eine von dem Deckenelement 18 ausgehende umlaufende Schürze 92, die in einer in einer umlaufenden Rinne 94 vorhandenen Flüssigkeit 96 eintaucht. Bei der Flüssigkeit handelt es sich dabei um eine solche, die schwer verdampft und keine der zu messenden VOCs aufnimmt bzw. abgibt oder nur in einem zu Messverfälschungen nicht führendem Umfang. Um Temperaturverfälschungen aufgrund der Abdichtflüssigkeit 96 auszuschließen, ist diese temperierbar, und zwar auf eine Temperatur, die der im Kammerinnenraum 22 entspricht. Hierzu läuft die Flüssigkeit 96 in einem Kreislauf, wie prinzipiell der Fig. 5 zu entnehmen ist.

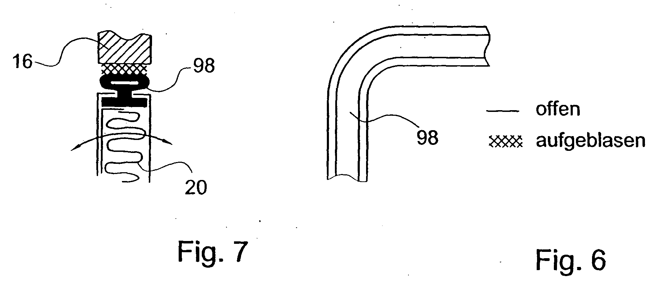

Um Messverfälschungen durch das Verschlusselement 20, also die Tür auszuschließen, ist diese gegenüber der Öffnung in der Seitenwandung 16 über eine umlaufende Dichtung 98 abdichtbar. Hierbei handelt es sich um eine aufblasbare Dichtung, wie anhand der Prinzipdarstellung in Fig. 7 verdeutlicht werden soll. Die Prinzipdarstellung in Fig. 6 zeigt, dass die Dichtung 98 in den Eckbereichen durchgehend ausgebildet ist, also nicht aus einzelnen Abschnitten besteht.

## Patentansprüche

1. Kammer (10) mit Volumenausgleich zur Messung von Verdunstungs- bzw. Verdampfungsemission eines in der Kammer angeordneten Objekts wie Kraftfahrzeugs (24) oder eines Teils eines solchen, umfassend die Kammer begrenzende Seiten-, Boden- und Deckenwandungen (12, 14, 16, 18, 26, 28, 60, 62, 80, 82) sowie eine Temperiereinrichtung (54, 56, 58, 74, 84, 86) zum Einstellen eines gewünschten Temperaturgangs in der Kammer,
**dadurch gekennzeichnet,**
**dass** die Temperiereinrichtung (54, 56, 58, 74, 84, 86) zumindest eine der temperierbar ausgebildeten Wandungen (12, 14, 16, 18, 26, 28, 60, 62, 80, 82) oder eines Abschnitts dieser ist.

2. Kammer nach Anspruch 1,
**dadurch gekennzeichnet,**
**dass** zumindest zwei, vorzugsweise sämtliche Seitenwandungen (14, 16, 26, 28, 60, 62, 80, 82) bzw. Abschnitte dieser die Temperiereinrichtung sind, wobei insbesondere die temperierbare Wandung (26, 28, 60, 62) bzw. Abschnitte dieser doppelwandig ausgebildet und so gebildeter Zwischenraum (54, 56, 58, 74) mit einem temperierbaren Fluid beaufschlagbar ist.

3. Kammer nach Anspruch 1 oder 2,
**dadurch gekennzeichnet,**
**dass** der Zwischenraum (54, 56, 58, 74) mit einem temperierbaren Gas wie Luft oder einer temperierbaren Flüssigkeit durchströmt ist und/oder auf der Wandung (80, 82) eine Flächenheizung (84, 86) und/oder auf der Wandung ein oder mehrere Peltierelemente aufgebracht sind, wobei die Flächenheizung bzw. das bzw. die Peltierelemente außenseitig auf der Wandung (80, 82) angeordnet sind.

4. Kammer nach zumindest einem der vorhergehenden Ansprüche,
**dadurch gekennzeichnet,**
**dass** die Wandung (26, 28) aus einer ebenen Innenwandung (30, 32) und einer wellenförmigen Außenwandung (34, 36) besteht und dass die Innen- und die Außenwandung im Scheitelpunktbereich letzterer miteinander verbunden wie verschweißt, insbesondere ultraschallverschweißt sind.

5. Kammer nach zumindest einem der vorhergehenden Ansprüche,
**dadurch gekennzeichnet,**
**dass** der Kammerinnenraum (22) wärmetauscherfrei ausgebildet ist.

6. Kammer nach zumindest einem der vorhergehenden Ansprüche,
**dadurch gekennzeichnet,**
**dass** in dem Kammerinnenraum (22) ein Lüfter (90) angeordnet ist, dessen Antrieb (25) des Lüfters kammeraußenseitig angeordnet ist, wobei insbesondere das Lüfterrad des Lüfters über eine Magnetkupplung antreibbar ist.

7. Kammer nach zumindest einem der vorhergehenden Ansprüche,
**dadurch gekennzeichnet,**
**dass** in dem Kammerinnenraum (22) eine oder mehrere Sensoren angeordnet sind, die kabellos mit außerhalb der Kammer angeordneter Auswerteeinrichtung verbunden sind und/oder über ein oder mehrere Kabel mit außerhalb der Kammer (10) angeordneter Auswerteeinrichtung verbunden sind, wobei das bzw. die Kabel entlang Normalen oder in etwa Normalen nächstliegender Wandung (12, 14, 16, 18) verläuft.

8. Kammer nach zumindest einem der vorhergehenden Ansprüche,
**dadurch gekennzeichnet,**
**dass** in dem Kammerinnenraum (22) verlaufendes Kabel eine Adsorption von zu messenden Elementen wie Kohlenwasserstoffen weitgehend ausschließende Ummantelung aufweist, die insbesondere aus Polytetrafluoräthylen besteht.

9. Kammer nach zumindest einem der vorhergehenden Ansprüche,
**dadurch gekennzeichnet,**
**dass** kammerinnenseitige Fläche der Wandung (12, 14, 16, 18) geglättet ist bzw. Innenfläche der Wandung mit einer eine Adsorption von zu messenden Elementen wie Kohlenwasserstoffen ausschließende oder weitgehend ausschließende Beschichtung versehen ist, die insbesondere ein Kunststoff wie Polytetrafluoräthylen oder Polyvinylfluorid ist.

10. Kammer nach zumindest einem der vorhergehenden Ansprüche,
**dadurch gekennzeichnet,**
**dass** die Deckenwandung (18) oder ein Abschnitt dieser kammerdruckabhängig gegenüber dem Kammerinnenraum (22) verstellbar und gegenüber diesem über eine Flüssigkeitsdichtung und/oder eine flexible Dichtung abgedichtet ist, wobei insbesondere bei Verwendung einer Flüssigkeit (96) als Dichtungsmittel diese auf eine Temperatur eingestellt ist, die der des Kammerinnenraums entspricht.

11. Kammer nach zumindest einem der vorhergehenden Ansprüche,
**dadurch gekennzeichnet,**
**dass** in einer Seitenwandung (16) eine von einem Verschlusselement (20) wie Tür angeordnete Öffnung verschließbar ist, das gegenüber der Öffnung über eine umlaufende oder im Wesentlichen umlaufende druckluft beaufschlagte Dichtung (98) abdichtbar ist.

12. Verfahren zum Messen von Verdunstungs- bzw. Verdampfungsemission eines in einer Seiten-, Boden- und Deckenwandungen aufweisenden Kammer angeordneten Objekts, wobei Kammerinnenraum während der Messung auf einen gewünschten Temperaturgang, insbesondere sinusförmigen Temperaturverlauf zwischen vorzugsweise in etwa 18 °C und vorzugsweise in etwa 42 °C eingestellt wird,
**dadurch gekennzeichnet,**
**dass** Wandungen mit kammerseitigen Innenflächen verwendet werden, deren Adsorption und/oder Desorption von zu messenden Elementen minimiert ist, dass die Wandungen oder zumindest einige und/oder Abschnitte dieser vor Anordnung des Objekts in der Kammer bis zu einer Temperatur T ausgeheizt werden und dass der gewünschte Temperarturgang in der Kammer bei in dieser angeordnetem Objekt durch Beheizung und Kühlung der Wandungen oder zumindest einiger und/oder Abschnitte dieser erfolgt.

13. Verfahren nach Anspruch 12,
**dadurch gekennzeichnet,**
**dass** die Wandung bzw. Wandungen bzw. deren Abschnitt bzw. Abschnitte durch Fluidbeaufschlagung und/oder elektrisch temperiert werden.

14. Verfahren nach Anspruch 12 oder 13,
**dadurch gekennzeichnet,**
**dass** die Wandung bzw. Wandungen bzw. deren Abschnitt bzw. Abschnitte bis zu einer materialbedingten Grenztemperatur, insbesondere bis zu einer Temperatur T mit vorzugsweise T ≤ 100 °C ausgeheizt werden.
